# EUROPÄISCHE PATENTSCHRIFT

(11) **EP 0 485 558 B1**
(45) Veröffentlichungstag und Bekanntmachung des Hinweises auf die Patenterteilung: **06.09.1995**
(21) Anmeldenummer: 91909907.7
(22) Anmeldetag: 01.06.1991
(51) Int. Cl.: F16H 57/12, G12B 3/00, G01D 11/18

(54) **UNTERSETZUNGSGETRIEBE FÜR ANZEIGEINSTRUMENT**
STEP-DOWN GEAR FOR DISPLAY INSTRUMENT
DEMULTIPLICATEUR POUR INDICATEUR

(30) Priorität: 06.06.1990 DE 4018091
(43) Veröffentlichungstag der Anmeldung: 20.05.1992
(73) Patentinhaber: ROBERT BOSCH GMBH, 70442 Stuttgart (DE)
(72) Erfinder: GODDARD, George, D-8508 Wendelstein (DE); BONSS, Rainer, D-8541 Buechenbach (DE)
(86) Internationale Anmeldenummer: DE9100464
(87) Internationale Veröffentlichungsnummer: WO9119119

(56) Entgegenhaltungen:
- EP-A- 0 080 025
- FR-A- 2 369 655
- US-A- 2 941 415
- US-A- 2 959 975

## Beschreibung

### Stand der Technik

Die Erfindung geht aus von einem Anzeigegerät mit einem Untersetzungsgetriebe mit einem Elektromotor als Antrieb nach der Gattung des Hauptanspruchs. Wird ein derartiges Untersetzungsgetriebe für Anzeigeinstrumente, beispielsweise in einem Kraftfahrzeug verwendet, dann tritt häufig das Problem auf, daß der antreibende Elektromotor insbesondere bei einem Drehrichtungswechsel sich bereits in die geänderte Richtung bewegt, ohne daß sich ein auf der Abtriebswelle des Untersetzungsgetriebes befestigter Zeiger mitbewegt, da bei den Zahnflanken zwischen den Zahnrädern des Getriebes ein gewisses Zahnflankenspiel vorhanden ist. Durch dieses Spiel innerhalb des Getriebes wird die Anzeige relativ ungenau, da der angezeigte Meßwert nicht dem Sollwert entspricht. Weiterhin ist ungünstig, daß aufgrund des Spiels die Laufgeräusche des Getriebes relativ laut sind und insbesondere in einem Kraftfahrzeug störend wirken.

Aus der US 2,941,415 ist ein Untersetzungsgetriebe bekannt, bei dem eine Spiralfeder eine Gegenkraft auf die Abgangswelle des Untersetzungsgetriebes ausübt. An der Abgangswelle ist ein Stellglied angebracht, das als Schleifer eines Potentiometers ausgebildet ist. Der Schleifer setzt also eine mechanische Bewegung in ein elektrisches Signal um. Er wirkt daher als eine Art Sensor, nicht jedoch als Anzeigegerät für einen elektrischen Meßwert.

Aus der Patentschrift DE 903 660 ist ein Ganganzeiger für ein Geschwindigkeitwechselgetriebe in Kraftfahrzeugen bekannt, bei dem ein Drehspulinstrument mit einem Potentiometer verbunden ist. Der Schleifer des Potentiometers wird von einer Getriebe-Steuerwalze derart bewegt, daß ein der Stellung der Steuerwalze entsprechender Strom durch das Drehspulinstrument fließt. Das Drehspulinstrument hat kein Getriebe. Drehspulinstrumente benötigen beispielsweise in einem Armaturenbrett eines Kraftfahrzeugs relativ viel Raum. Dieser Raum wird jedoch insbesondere bei modernen Fahrzeugen für weitere Anzeigen benötigt.

### Vorteile der Erfindung

Das erfindungsgemäße Anzeigegerät mit den kennzeichnenden Merkmalen des Hauptanspruchs hat demgegenüber den Vorteil, daß das Anzeigegerät kompakt aufgebaut ist. Der Zeiger des Anzeigeinstrumentes folgt exakt dem Vortrieb des antreibenden Elektromotors ohne Spiel und ohne Verzögerung. Besonders vorteilhaft ist, daß als Antriebsmotor ein Schrittmotor verwendet wird. Schrittmotoren sind sehr einfach anzusteuern und lassen in Verbindung mit einem entsprechenden Untersetzungsverhältnis eine geringe Schrittweite des Zeigers des Anzeigeinstrumentes zu.

Durch die in den abhängigen Ansprüchen aufgeführten Maßnahmen sind vorteilhafte Weiterbildungen und Verbesserungen des im Hauptanspruch angegebenen Anzeigegerätes möglich.

In vielen Fällen ist aus Designgründen günstig, daß der Stift für den Nullanschlag des Zeigers nicht sichtbar ist. Besonders vorteilhaft ist, wenn der Anschlagstift auf dem Zahnrad der Abtriebswelle derart angeordnet ist, daß er in einer Gehäusenut laufen kann. Dadurch kann die Bauform des Untersetzungsgetriebes kleingehalten werden, da der Anschlagstift keinen zusätzlichen Platz benötigt.

Die Verwendung eines Zahnradgetriebes ist deswegen als vorteilhaft anzusehen, weil Zahnradgetriebe praktisch wartungs- und verschleißfrei arbeiten und preiswert herstellbar sind. Gegenüber riemengetriebenen Getrieben haben sie den Vorteil, daß sie schlupffrei arbeiten.

### Weitere Vorteile sind der Beschreibung entnehmbar.

### Zeichnung

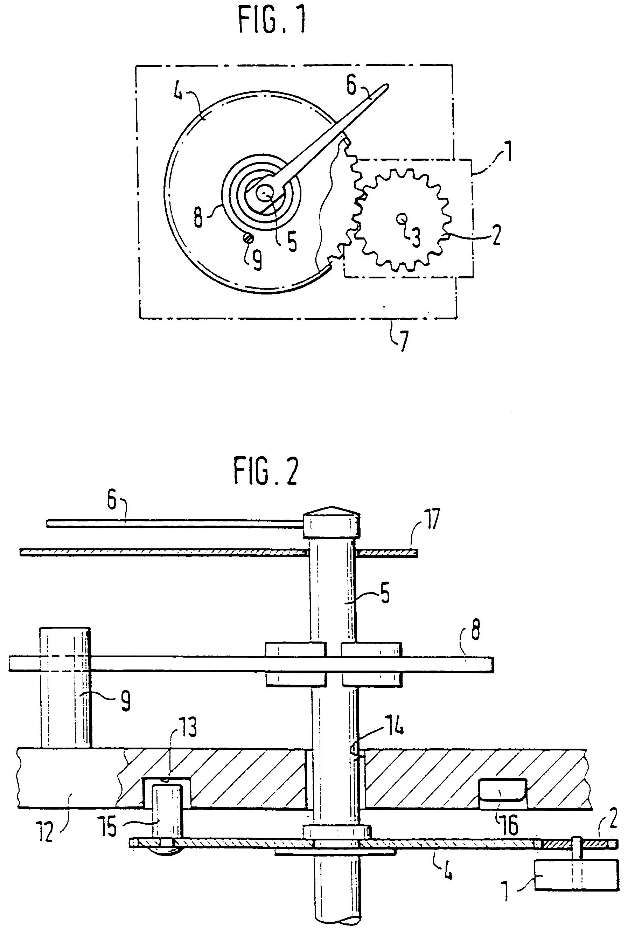

Ein Ausführungsbeispiel der Erfindung ist in der Zeichnung dargestellt und in der nachfolgenden Beschreibung näher erläutert. Es zeigen Figur 1 ein Ausführungsbeispiel der Erfindung und Figur 2 einen Querschnitt durch das Ausführungsbeispiels.

### Beschreibung des Ausführungsbeispiels

In Figur 1 ist ein Elektromotor 1 schematisch dargestellt, auf dessen Motorwelle 3 ein Motorritzel 2 angebracht ist. Die Zähne des Motorritzels greifen in ein Zahnrad 4 des Untersetzungsgetriebes 7. Das Untersetzungsgetriebe 7 weist eine Abtriebswelle 5 auf, die mit dem Zahnrad 4 mechanisch fest verbunden ist. Weiterhin ist auf der Abtriebswelle 5 ein Zeiger 6 befestigt.

Wie aus Figur 2 ersichtlich ist, ist unterhalb des Zeigers 6 konzentrisch zur Abtriebswelle 5 eine Spiralfeder 8 angeordnet, deren inneres Ende fest mit der Abtriebswelle 5 und deren äußeres Ende mit einem Gehäusepunkt 9 verbunden ist. Die Spiralfeder ist derart vorgespannt, daß ein Drehmoment an der Antriebswelle 5 in Richtung Nullposition wirkt, das den Zeiger in Richtung auf den justierbaren Anschlag 15, 16 bewegt. Auf dem Abtriebszahnrad 4 ist ein Stift oder eine Lasche als Nullanschlag 15 angeordnet, der in einer entsprechenden Führungshilfe 13, beispielsweise einer Nut im Gehäuse, läuft, bis er an einer vorbestimmten Stelle dieser Nut gegen den Anschlag 16 stößt. Auf die Führungshilfe kann auch verzichtet werden.

Durch diesen Anschlag ist der Drehbereich des Zeigers 6 maximal auf nicht ganz 360° begrenzt. Da der Nullanschlag zwischen dem Abtriebszahnrad 4 und dem Gehäuseteil 12 angeordnet ist, ist er von oben, wenn das Anzeigeinstrument beispielsweise im Kraftfahrzeug eingebaut ist, nicht sichtbar. Der Anschlag 16 kann auf dem Gehäuseteil 12 verschiebbar angeordnet werden, so daß eine Justage des Nullpunktes des Zeigers 6 möglich ist.

Es hat sich als vorteilhaft erwiesen, daß durch diese kompakte Anordnung des Nullstellungstiftes ein besonders großer Spielraum für die Gestaltung des Anzeigegerätes gegeben ist. So kann beispielsweise eine unter dem Zeiger 6 angeordnete Skalenscheibe 17 lichtdurchlässig angeordnet sein und durch den vorhandenen Platz zwischen der Skalenscheibe 17 und der Spiralfeder 8 direkt beleuchtet werden.

Im folgenden wird die Funktionsweise dieser Anordnung beschrieben.

Im Ausführungsbeispiel ist vorgesehen, als Elektromotor ein Schrittmotor zu verwenden, der auf einfache Weise mit digitalen Impulsen angesteuert werden kann. Eine derartige Steuerung ist in der nicht vorveröffentlichen Patentanmeldung DE P 38 18 538.9 beschrieben. Je nach Anzahl der Ansteuerimpulse bewegt sich die Motorwelle 3 mit dem Motorritzel 2 um einen bestimmten Drehwinkel in Vorwärts- oder Rückwärtsdrehrichtung. Das mit dem Motorritzel 2 verbundene Untersetzungsgetriebe 7, das nicht nur eins, sondern je nach Untersetzungsverhältnis auch mehrere Zahnräder aufweisen kann, bewegt sich mit dem Zeiger 6 um den entsprechenden Winkelausschlag. Dabei versucht die Spiralfeder 8 den Zeiger 6 entgegen dem Uhrzeigersinn in Richtung Nullpunkt zu drücken. Da die Rückstellkraft der Spiralfeder 8 relativ groß ist, werden auch bei schnellem Drehrichtungswechsel stets die Flanken der Getrieberadzähne gegeneinander gedrückt, so daß kein Spiel entstehen kann. Der Zeiger 6 bewegt sich dann ohne Totgang über die Skalenscheibe 17.

In weiterer Ausgestaltung der Erfindung ist vorgesehen, anstelle des Zahnradgetriebes ein Untersetzungsgetriebe mit einem Riemenantrieb zu verwenden. Riemenantriebe haben den Vorteil, daß sie besonders geräuscharm laufen. In diesem Fall tritt ebenfalls kein Totgang des Zeigers 6 auf, da der Riemen relativ elastisch ist und die Spiralfeder 8 ebenfalls ein Drehmoment aufbringt, das den Zeiger 6 in Richtung Nullpunkt drückt.

Da das Untersetzungsgetriebe relativ klein ist, läßt es sich vorteilhaft in das Motorgehäuse des Schrittmotors einbauen, so daß eine kompakte Bauweise entsteht, die leicht austauschbar ist.

## Patentansprüche

1. Anzeigegerät mit einem Untersetzungsgetriebe (7), das von einem Elektromotor (1) antreibbar ist und auf dessen Abtriebswelle (5) ein Zeiger (6) befestigt ist, und mit einer Spiralfeder (8), die eine Kraft auf die Abtriebswelle (5) in Richtung einer Nullstellung des Zeigers (6) ausübt, dadurch gekennzeichnet, daß der Elektromotor (1) ein Schrittmotor ist, daß das Untersetzungsgetriebe (7) in das Gehäuse des Schrittmotors eingebaut ist und daß eine Steuerung den Schrittmotor, ausgehend von der Nullstellung des Zeigers (6) entsprechend dem anzuzeigenden Meßwert derart ansteuert, daß der Zeiger (6) sich um einen entsprechenden Drehwinkel dreht.

2. Anzeigegerät nach Anspruch 1, dadurch gekennzeichnet, daß als Nullstellung für den Zeiger (6) ein Nullanschlag (15, 16) verwendbar ist, der unterhalb einer Skalenscheibe (17) angeordnet ist.

3. Anzeigegerät nach Anspruch 2, dadurch gekennzeichnet, daß der Nullanschlag (15, 16) auf einem Gehäuseteil (12) bzw. an einer entsprechenden Position auf einem Abtriebsrad (4) oder der Abtriebswelle (5) angeordnet ist.

4. Anzeigegerät nach Anspruch 2 oder 3, dadurch gekennzeichnet, daß auf dem Abtriebsrad (4) ein Anschlagstift (15) angeordnet ist, der in einer zu der Abtriebswelle (5) konzentrisch angeordneten, kreisförmigen Führungshilfe (13), vorzugsweise einer Nut im Gehäuseteil (12) läuft.

5. Anzeigegerät nach einem der vorhergehenden Ansprüche, dadurch gekennzeichnet, daß das Untersetzungsgetriebe (7) ein Zahnradgetriebe ist.

6. Anzeigegerät nach einem der Ansprüche 1 bis 4, dadurch gekennzeichnet, daß das Untersetzungsgetriebe (7) einen Riemenantrieb aufweist.

## Claims

1. Indicator having a reduction gear (7), which can be driven by an electric motor (1) and on whose output shaft (5) a pointer (6) is fastened, and having a spiral spring (8), which exerts a force on the output shaft (5) in the direction of a zero position of the pointer (6), characterized in that the electric motor (1) is a stepping motor, in that the reduction gear (7) is incorporated into the housing of the stepping motor and in that a control system drives the stepping motor, proceeding from the zero position of the pointer (6), in accordance with the measured value to be indicated, in such a way that the pointer (6) rotates through a corresponding angle of rotation.

2. Indicator according to Claim 1, characterized in that, as zero position for the pointer (6), a zero stop (15, 16) can be used, which is arranged underneath a scale disc (17).

3. Indicator according to Claim 2, characterized in that the zero stop (15, 16) is arranged on a housing part (12) and, respectively, at a corresponding position on an output wheel (4) or the output shaft (5).

4. Indicator according to Claim 2 or 3, characterized in that a stop pin (15) is arranged on the output wheel (4) and runs in a circular auxiliary guide (13), preferably a groove in the housing part (12), which guide is arranged concentrically with respect to the output shaft (5).

5. Indicator according to one of the preceding claims, characterized in that the reduction gear (7) is a gear mechanism.

6. Indicator according to one of Claims 1 to 4, characterized in that the reduction gear (7) has a belt drive.

## Revendications

1. Indicateur comportant un démultiplicateur (7) entraîné par un moteur électrique (1) et dont l'axe de sortie (5) est fixé à une aiguille (6) ainsi qu'un ressort en spirale (8) qui exerce une force sur l'axe de sortie (5) dans le sens du rappel de l'aiguille (6) vers le zéro, caractérisé en ce que le moteur électrique (1) est un moteur pas à pas, le démultiplicateur (7) est logé dans le boîtier du moteur pas à pas et une commande agit sur le moteur pas à pas pour que partant de son zéro, l'aiguille (6) tourne d'un angle de rotation déterminé en fonction de la grandeur de mesure à indiquer.

2. Indicateur selon la revendication 1, caractérisé en ce que le zéro de l'aiguille (6) est une butée de zéro (15, 16) placée en dessous du cadran portant la graduation (17).

3. Indicateur selon la revendication 2, caractérisé en ce que la butée de zéro (15, 16) est prévue sur une partie de boîtier (12) ou dans une position correspondante sur une roue de sortie (4) ou sur l'axe de sortie (5).

4. Indicateur selon la revendication 3 ou 4, caractérisé en ce que la roue de sortie (4) comporte une tige de butée (15) circulant dans un guide (13), de forme circulaire, concentrique à l'axe de sortie (5), ce guide étant de préférence une rainure réalisée dans une partie (12) du boîtier.

5. Indicateur selon l'une des revendications précédentes, caractérisé en ce que le démultiplicateur (7) est une transmission à roues dentées.

6. Indicateur selon l'une des revendications 1 à 4, caractérisé en ce que le démultiplicateur (7) comporte une transmission à courroie.
